# EUROPEAN PATENT APPLICATION

(11) **EP 4 141 990 A1**
(43) Date of publication of application: **01.03.2023**
(21) Application number: 20932519.0
(22) Date of filing: 23.04.2020
(51) Int. Cl.: H01M 4/36

(54) **NEGATIVE ELECTRODE MATERIAL, ELECTRODE PIECE COMPRISING SAME, ELECTROCHEMICAL DEVICE, AND ELECTRONIC DEVICE**

(71) Applicant: Ningde Amperex Technology Limited, Ningde, Fujian 352100 (CN)
(72) Inventor: JIANG, Daoyi, Ningde, Fujian 352100 (CN); CHEN, Zhihuan, Ningde, Fujian 352100 (CN); ZHANG, Ting, Ningde, Fujian 352100 (CN); CUI, Hang, Ningde, Fujian 352100 (CN)
(74) Representative: Klunker IP Patentanwälte PartG mbB
(86) International application number: PCT/CN2020/086434
(87) International publication number: WO 2021/212418

(57) **Abstract**

This application provides a negative electrode material, an electrode plate containing the material, an electrochemical device, and an electronic device. The negative electrode material includes a silicon-based particle and SiOC existent on a surface of the silicon-based particle. An atomic ratio between Si, O, and C in the SiOC is 1: (0.5 to 5): (0.5 to 10). This application significantly improves cycle stability of the surface of the negative electrode material during volume expansion and shrinkage, thereby reducing the amount of accumulated by-products. Therefore, the electrochemical device containing the negative electrode plate achieves high cycle stability and high volume expansion performance.

## Description

### TECHNICAL FIELD

This application relates to the electrochemical field, and in particular, to a negative electrode material, an electrode plate containing same, an electrochemical device, and an electronic device.

### BACKGROUND

Lithium-ion batteries are widely used in the field of consumer electronics by virtue of characteristics such as a high specific energy, a high working voltage, a low self-discharge rate, a small size, and a light weight. With rapid development of electric vehicles and portable electronic devices, people are imposing higher requirements on relevant features of a lithium-ion battery such as energy density, safety, and cycle performance. A silicon-based negative electrode material possesses a gram capacity of up to 1500 to 4200 mAh/g, and is considered to be a next-generation lithium-ion negative electrode material that embraces the most promising application prospect.

However, the silicon-based negative electrode material encounters the following problems: the conductivity of silicon is as low as 100 Ω·cm, the volume expansion rate of the silicon-based negative electrode material is approximately 300% during a charge-and-discharge cycle, and the material gives rise to an unstable SEI (Solid Electrolyte Interphase, solid electrolyte interphase) film. Such problems hinder further application of the silicon-based negative electrode material. Currently, cycle stability and rate performance of the silicon-based material are primarily enhanced by designing a porous silicon-based material, downsizing a silicon-oxygen material, or coating the silicon-based material with an oxide, a polymer, a carbon material, or the like. The design of a porous silicon-based material and the downsizing of the silicon-oxygen material can improve the rate performance to some extent. However, with the progress of cycles, occurrence of parasitic reactions, and uncontrollable growth of the SEI film, the cycle stability of the silicon-based negative electrode material is further undermined. Coating the silicon-based material with an oxide or polymer can avoid contact between an electrolytic solution and an electrode material. However, the poor conductivity of the silicon-based negative electrode material increases an electrochemical impedance. In addition, a coating layer is prone to be damaged during intercalation and deintercalation of lithium, thereby reducing the cycle life of the negative electrode material. Coating the silicon-based material with a carbon material adds a high conductivity to the silicon-based material, but during processing of an electrode plate of a lithium-ion battery, the carbon-coated silicon-based material is very prone to be decarbonized due to repeated exertion of a shearing force, thereby impairing a Coulombic efficiency of the material on the one hand. On the other hand, due to expansion, shrinkage, and ruptures of silicon during cycles, a carbon layer is also prone to peel off from the substrate. When the SEI film is formed and the by-products wrap the substrate, the electrochemical impedance and polarization are increasing, thereby shortening the cycle life of the lithium-ion battery.

Therefore, there is an urgent need to develop a silicon-based negative electrode material that can further improve the cycle stability of the lithium-ion battery and suppress the volume expansion of the lithium-ion battery.

### SUMMARY

An objective of this application is to provide a negative electrode material, an electrode plate containing the material, an electrochemical device, and an electronic device to improve cycle stability of the electrochemical device and reduce volume expansion of the electrochemical device. Specific technical solutions are as follows:

A first aspect of this application provides a negative electrode material, including a silicon-based particle and a silicon oxycarbon ceramic material (SiOC) existent on a surface of the silicon-based particle.

An atomic ratio between Si, O, and C in the SiOC is 1: (0.5 to 5): (0.5 to 10).

Dᵥ₅₀ of the negative electrode material is 2.5 µm to 10 µm, and a mass percent of the SiOC in a mass of the negative electrode material is 0.1% to 20%.

In an embodiment of this application, the SiOC is in an amorphous structure.

In an embodiment of this application, a particle size distribution of the silicon-based particle satisfies: 0.3 ≤ Dₙ₁₀/Dᵥ₅₀ ≤ 0.6.

In an embodiment of this application, the silicon-based particle includes at least one of a nano-silicon particle, a silicon suboxide particle, or a carbon-silicon composite particle.

In an embodiment of this application, the silicon-based particle includes at least one of element Li or element Mg.

In an embodiment of this application, the SiOC is formed by a pyrolysis reaction of a siloxane material, and the siloxane material includes at least one of siloxane, a siloxane hydrolyzate, or silane resin.

In an embodiment of this application, the siloxane includes at least one of methyltriethoxysilane, ethyltriethoxysilane, vinyltriethoxysilane, phenyltriethoxysilane, diphenyltriethoxysilane, diethoxymethylphenylsilane, methyltrimethoxysilane, benzyltriethoxysilane, vinyltrimethoxysilane, isobutyltriethoxysilane, dimethoxy(methyl)phenylsilane, cyclohexylmethyldimethoxysilane, octyltrimethoxysilane, propyltrimethoxysilane, octadecyltriethoxysilane, hexyltriethoxysilane, octylmethyldimethoxysilane, dimethyldiethoxysilane, octadecyltrimethoxysilane, dodecyltriethoxysilane, allyltrimethoxysilane, hexadecyl trimethoxysilane, methylvinyldiethoxysilane, n-octyltriethoxysilane, diisobutyldimethoxysilane, (chloromethyl)diethoxy(methyl)silane, dimethoxymethylvinylsilane, γ-aminopropylmethyldiethoxysilane, or 1,4-bis(triethoxysilyl)benzene.

The silane resin includes silicone resin, and the silicone resin includes at least one of aliphatic group silane resin or phenyl silane resin.

In an embodiment of this application, an oxide represented by a chemical formula MeO_{y} further exists on the surface of the silicon-based particle. The element Me includes at least one of Al, Si, Ti, Mn, V, Cr, Co, or Zr, 0.5 ≤ y ≤ 3, and the oxide contains a carbon material. A mass percent of the oxide in a mass of the negative electrode material may be 0.1% to 5%, and preferably 1% to 3%.

In an embodiment of this application, a polymer further exists on the surface of the silicon-based particle. The polymer contains a carbon material. A mass percent of the polymer in the mass of the negative electrode material may be 1% to 10%, and preferably 3% to 6%.

In an embodiment of this application, the polymer includes at least one of polyvinylidene difluoride, carboxymethyl cellulose, sodium carboxymethyl cellulose, polyvinylpyrrolidone, polyacrylic acid, polystyrene butadiene rubber, polyacrylamide, polyimide, polyamide imide, or a derivative thereof.

In an embodiment of this application, the carbon material includes at least one of carbon nanotubes, carbon nanoparticles, carbon fibers, or graphene.

A second aspect of this application provides a negative electrode plate, including the negative electrode material according to the first aspect.

A third aspect of this application provides an electrochemical device, including: a positive electrode plate;
a negative electrode plate;
a separator, where the separator is located between the positive electrode plate and the negative electrode plate; and
an electrolytic solution.

The negative electrode plate is the negative electrode plate disclosed in the second aspect above.

A fourth aspect of this application provides an electronic device, including the electrochemical device according to the third aspect.

In the negative electrode material according to this application, the SiOC exists on the surface of the silicon-based particle. The bonding strength between the SiOC and the silicon-based particle is high, thereby significantly improving cycle stability of the surface of the negative electrode material during volume expansion and shrinkage, and in turn, reducing the amount of accumulated by-products. In addition, the negative electrode plate, the electrochemical device, and the electronic device that each contain the negative electrode material according to this application achieve high cycle stability and high volume expansion performance.

### BRIEF DESCRIPTION OF DRAWINGS

To describe the technical solutions in this application or the prior art more clearly, the following outlines the drawings to be used in the embodiments of this application or the prior art. Evidently, the drawings outlined below are merely about some embodiments of this application, and a person of ordinary skill in the art may derive other technical solutions from the drawings without making any creative effort.
FIG. 1 is a cross-sectional FIB-TEM structural diagram of a negative electrode material prepared according to Embodiment 6 of this application; and
FIG. 2 is a cross-sectional FIB-TEM structural diagram of a negative electrode material prepared according to Comparative Embodiment 1 of this application.

### DETAILED DESCRIPTION OF EMBODIMENTS

To make the objectives, technical solutions, and advantages of this application clearer, the following describes this application in further detail with reference to drawings and embodiments. Evidently, the described embodiments are merely a part of but not all of the embodiments of this application. All other technical solutions derived by a person of ordinary skill in the art based on the embodiments of this application without making any creative effort fall within the protection scope of this application.

It is hereby noted that in specific embodiments of this application, this application is construed by using a lithium-ion battery as an example of the electrochemical device, but the electrochemical device according to this application is not limited to the lithium-ion battery.

This application provides a negative electrode material, including a silicon-based particle and SiOC existent on a surface of the silicon-based particle. An atomic ratio between Si, O, and C in the SiOC is 1: (0.5 to 5): (0.5 to 10). Dᵥ₅₀ of the negative electrode material is 2.5 µm to 10 µm, and a mass percent of the SiOC in a mass of the negative electrode material is 0.1% to 20%, preferably 0.3% to 10%, and more preferably 0.5% to 5%.

Dᵥ₅₀ herein represents a diameter of particles measured when the cumulative volume percentage of the measured particles reaches 50% of the total volume of all specimen particles in a volume-based particle size distribution curve viewed from a small-diameter side.

Through research, the inventor of this application finds that, the SiOC existent on the surface of silicon-based particle achieves high bonding strength between the SiOC and silicon-based particle, thereby stabilizing the negative electrode material. This significantly improves the cycle stability of the surface of the negative electrode material and reduces the amount of accumulated by-products during volume expansion and shrinkage, thereby reducing the volume expansion of the electrochemical device subjected to cycles. It is hereby noted that the silicon-based particle may be overlaid with the SiOC on at least a part of the surface, or may be fully wrapped in the SiOC.

In an embodiment of this application, the SiOC is in an amorphous structure. Without being limited to any theory, the amorphous structure is generally of higher mechanical stability, and therefore, the negative electrode material according to this application is of higher structural stability.

In an embodiment of this application, a particle size distribution of the silicon-based particle satisfies: 0.3 ≤ Dₙ₁₀/Dᵥ₅₀ ≤ 0.6.

Dₙ₁₀ herein represents a diameter of particles measured when the cumulative number percentage of the measured particles reaches 10% of the total number of all specimen particles in a number-based particle size distribution curve viewed from a small-diameter side.

The silicon-based particle is not particularly limited in this application, as long as the invention objectives of this application can be achieved. In an embodiment of this application, the silicon-based particle may include at least one of a nano-silicon particle, a silicon suboxide particle, or a carbon-silicon composite particle.

In an embodiment of this application, the silicon-based particle includes at least one of element Li or element Mg. Through research, the inventor finds that the SiOC existent on the surface of silicon-based particle containing Li and/or Mg can also effectively improve the cycle performance of the electrochemical device.

In an embodiment of this application, the SiOC is formed by a pyrolysis reaction of a siloxane material, and the siloxane material includes at least one of siloxane, a siloxane hydrolyzate, or silane resin.

In an embodiment of this application, the siloxane may include at least one of methyltriethoxysilane, ethyltriethoxysilane, vinyltriethoxysilane, phenyltriethoxysilane, diphenyltriethoxysilane, diethoxymethylphenylsilane, methyltrimethoxysilane, benzyltriethoxysilane, vinyltrimethoxysilane, isobutyltriethoxysilane, dimethoxy(methyl)phenylsilane, cyclohexylmethyldimethoxysilane, octyltrimethoxysilane, propyltrimethoxysilane, octadecyltriethoxysilane, hexyltriethoxysilane, octylmethyldimethoxysilane, dimethyldiethoxysilane, octadecyltrimethoxysilane, dodecyltriethoxysilane, allyltrimethoxysilane, hexadecyl trimethoxysilane, methylvinyldiethoxysilane, n-octyltriethoxysilane, diisobutyldimethoxysilane, (chloromethyl)diethoxy(methyl)silane, dimethoxymethylvinylsilane, γ-aminopropylmethyldiethoxysilane, or 1,4-bis(triethoxysilyl)benzene.

The silane resin includes silicone resin. The silicone resin includes at least one of aliphatic group silane resin or phenyl silane resin. The aliphatic group silane resin may include at least one of polydimethylsiloxane, methyl hydrogen silicone resin, or vinyl methyl silicone resin. The phenyl silane resin may include at least one of polydiphenyl silicone resin, polymethyl phenyl silicone resin, or vinyl phenyl silicone resin.

In an embodiment of this application, an oxide represented by a chemical formula MeO_{y} further exists on the surface of the silicon-based particle. The element Me includes at least one of Al, Si, Ti, Mn, V, Cr, Co, or Zr, and 0.5 ≤ y ≤ 3. It is hereby noted that the silicon-based particle may be overlaid with the oxide on at least a part of the surface, or may be fully wrapped in the oxide. The mass percent of the oxide is not particularly limited in this application. For example, the mass percent of the oxide in the mass of the negative electrode material is 0.1% to 5%, and preferably 1% to 3%.

Through research, the inventor finds that without being limited to any theory, when the oxide exists on the surface of silicon-based particle containing the SiOC, because the oxide is stable, the SiOC further wrapped in the oxide makes the negative electrode material more structurally stable. In addition, the oxide may contain a carbon material to further improve the conductivity of the negative electrode material.

In an embodiment of this application, a polymer further exists on the surface of the silicon-based particle. The polymer contains a carbon material. It is hereby noted that the silicon-based particle may be overlaid with the polymer on at least a part of the surface, or may be fully wrapped in the polymer. The mass percent of the polymer is not particularly limited in this application. For example, the mass percent of the polymer in the mass of the negative electrode material is 1% to 10%, and preferably 3% to 6%.

Through research, the inventor finds that without being limited to any theory, the polymer itself is usually highly stable in structure and can serve as a carrier of a conductive material such as a carbon material. In order to further improve the conductivity of the negative electrode material, in an embodiment of this application, a conductive polymer may further exist on the surface of the silicon-based particle containing the SiOC.

The carbon material is not particularly limited in this application, as long as the invention objectives of this application can be achieved. In an embodiment of this application, the carbon material may include at least one of carbon nanotubes, carbon nanoparticles, carbon fibers, or graphene. The dosage of the carbon material is not particularly limited, and may be determined based on well-known common knowledge in the art. One of the carbon materials may be used alone, or two or more of the carbon materials may be used in combination at any ratio.

The doping percent of the carbon material in the oxide or polymer is not particularly limited in this application, as long as the invention objectives of this application can be achieved. In an embodiment of this application, the doping percent of the carbon material in the oxide is 10% to 90%. For example, the doping percent of the carbon material in the oxide is 10%, or the doping percent of the carbon material in the oxide is 20%, or the doping percent of the carbon material in the oxide is 30%, or the doping percent of the carbon material in the oxide is 40%, or the doping percent of the carbon material in the oxide is 50%, or the doping percent of the carbon material in the oxide is 60%, or the doping percent of the carbon material in the oxide is 70%, or the doping percent of the carbon material in the oxide is 80%, or the doping percent of the carbon material in the oxide is 90%.

In an embodiment of this application, the doping percent of the carbon material in the polymer is 20% to 80%. For example, the doping percent of the carbon material in the polymer is 20%, or the doping percent of the carbon material in the polymer is 30%, or the doping percent of the carbon material in the polymer is 40%, or the doping percent of the carbon material in the polymer is 50%, or the doping percent of the carbon material in the polymer is 60%, or the doping percent of the carbon material in the polymer is 70%, or the doping percent of the carbon material in the polymer is 80%.

In an embodiment of this application, the polymer includes at least one of polyvinylidene difluoride, carboxymethyl cellulose, sodium carboxymethyl cellulose, polyvinylpyrrolidone, polyacrylic acid, polystyrene butadiene rubber, polyacrylamide, polyimide, polyamide imide, or a derivative thereof.

In the negative electrode material according to this application, the SiOC exists on the surface of the silicon-based particle. The bonding strength between the SiOC and the silicon-based particle is high, thereby significantly improving cycle stability of the surface of the negative electrode material during volume expansion and shrinkage, and in turn, reducing the amount of accumulated by-products.

The preparation method of the negative electrode material according to this application is not particularly limited. For example, the preparation method may include the following steps:
1. Dissolving a siloxane material in an aqueous organic solvent to obtain a solution A;
2. Adding a catalyst solution into the solution A to obtain a solution B;
3. Adding silicon-based particles into the solution B, stirring and removing the solvent, and drying to obtain a precursor; and
4. Sintering the precursor in an inert gas, and keeping the temperature for a given time to obtain a negative electrode material.

Alternatively, the preparation method may include the following steps:
First, dispersing the silicon-based particles in an aqueous organic solvent to obtain a mixed solution C, and then adding a siloxane material into the mixed solution C, and then adding a catalyst; stirring and removing the solvent, and drying to obtain a precursor, and then sintering the precursor in an inert gas; and keeping the temperature for a given time to obtain a negative electrode material.

The organic solvent is not particularly limited in this application, as long as the invention objectives of this application can be achieved. In an embodiment of this application, the organic solvent may include at least one of n-hexane or ethanol.

In an embodiment of this application, the water content of the aqueous organic solvent is 5 vol% to 10 vol%.

The catalyst is not particularly limited in this application, as long as the invention objectives of this application can be achieved. In an embodiment of this application, the catalyst may be an organic acid solution such as an oxalic acid solution.

In an embodiment of this application, the stirring time is 0.5 to 24 hours.

In an embodiment of this application, the solvent may be removed by at least one of the following methods: rotary evaporation, spray-drying, filtration, or freeze-drying.

In an embodiment of this application, the sintering temperature is 600 °C to 1000 °C, the temperature keeping time is 2 to 12 hours, and the temperature rise speed is 3 to 20 °C/min.

In an embodiment of this application, the inert gas may be at least one of nitrogen, argon, or helium.

In a process of preparing the negative electrode material in this application, on the one hand, the siloxane material and the silicon-based particles are mixed in the aqueous solvent. The surface of the silicon-based particles is rich in active groups such as silanol groups, and silicone particles formed by hydrolyzing the siloxane material is also rich in silanol groups. The siloxane material and the silicon-based particles are dehydrated and condensed in the aqueous solution to form a precursor with a strong chemical bonding force. Therefore, the bonding strength between the SiOC and the silicon-based particles is relatively high after sintering. In this way, the cycle stability of the surface of the negative electrode material is improved significantly during volume expansion and shrinkage, the amount of accumulated by-products is reduced, and in turn, the volume expansion of the electrochemical device is reduced after cycling. On the other hand, lithium intercalation characteristics of the SiOC can be effectively adjusted by adjusting the components and the sintering temperature of the precursor, thereby effectively increasing the lithium intercalation speed, alleviating negative electrode polarization of the electrochemical device, and in turn, reducing the impedance.

This application further provides a negative electrode plate, including the negative electrode material according to any one of the foregoing embodiments. Because the cycle stability of the surface of the negative electrode material is improved significantly during volume expansion and shrinkage and the amount of accumulated by-products is thereby reduced, the negative electrode plate according to this application achieves high cycle stability and high volume expansion performance.

This application further provides an electrochemical device, including: a positive electrode plate, a negative electrode plate, a separator, and an electrolytic solution. The separator is located between the positive electrode plate and the negative electrode plate. The electrochemical device contains the negative electrode plate according to an embodiment of this application. Because the cycle stability of the surface of the negative electrode material in the negative electrode plate is improved significantly during volume expansion and shrinkage and the amount of accumulated by-products is thereby reduced, the electrochemical device according to this application achieves high cycle stability and high volume expansion performance.

The preparation process of the electrochemical device is well known to a person skilled in the art, and is not particularly limited in this application. For example, a secondary battery may be manufactured in the following process: stacking a positive electrode, a separator, and a negative electrode in sequence, performing operations such as winding and folding as required, placing the stacked structure into a battery container, injecting an electrolytic solution into the battery container, and sealing the container, where the negative electrode is the negative electrode plate according to this application. In addition, an anti-overcurrent element, a guide plate, and the like may be placed into the battery container as required, so as to prevent pressure rise inside the battery, overcharge, and overdischarge.

This application further provides an electronic device. The electronic device contains the electrochemical device according to an embodiment of this application. Due to the high cycle stability and high volume expansion performance of the electrochemical device contained in the electronic device, the lifespan and safety of the electronic device are higher.

The positive electrode plate in this application is not particularly limited, and may be any positive electrode plate known in the art. For example, the positive electrode plate in this application may be a positive electrode plate containing lithium cobalt oxide, a positive electrode plate containing lithium manganese oxide, a positive electrode plate containing lithium iron phosphate, or a positive electrode plate containing lithium nickel cobalt manganese oxide or lithium nickel cobalt aluminum oxide.

The electrolytic solution in this application is not particularly limited, and may be any electrolytic well known in the art. For example, the electrolytic solution may be in a gel state, or a solid state, or a liquid state. For example, the liquid-state electrolytic solution may include a lithium salt and a nonaqueous solvent.

The lithium salt is not particularly limited, and may be any lithium salt known in the art, as long as the objectives of this application can be achieved. For example, the lithium salt may include at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, or LiPO₂F₂. For example, the lithium salt may be LiPF₆.

The nonaqueous solvent is not particularly limited, as long as the objectives of this application can be achieved. For example, the nonaqueous solvent may include at least one of a carbonate compound, a carboxylate compound, an ether compound, a nitrile compound, or another organic solvent.

For example, the carbonate compound may include at least one of diethyl carbonate (DEC), dimethyl carbonate (DMC), dipropyl carbonate (DPC), methyl propyl carbonate (MPC), ethylene propyl carbonate (EPC), ethylene carbonate (EC), propylene carbonate (PC), butylene carbonate (BC), vinyl ethylene carbonate (VEC), fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate.

The material of the current collector according to this application is not particularly limited, and may be a material well known to a person skilled in the art. For example, the material of the current collector includes or is not limited to at least one of copper, nickel, titanium, molybdenum, aluminum, iron, zinc, or stainless steel. Alternatively, the material of the current collector is a conductive inorganic material such as carbon or graphene. One of such materials may be used alone, or two or more thereof may be used in combination.

The implementations of this application are described below in more detail with reference to embodiments and comparative embodiments, but this application is not limited to such embodiments.

### Embodiment 1

1. Dispersing 100 g of silicon-oxygen material in 500 mL of aqueous n-hexane, and stirring evenly, where the silicon-oxygen material is silicon monoxide (SiO), and the water content of the n-hexane is 5 vol%.
2. Dissolving 0.5 g of triethoxyvinylsilane (TPS) in the mixed solution obtained in step 1;
3. Adding a catalyst into the mixed solution obtained in step 2, where the doping amount of the catalyst is 1/10 of the amount of the SiO; and increasing the temperature to 60 °C and stirring for 2 hours, removing the solvent and drying to obtain a precursor, where the catalyst is an oxalic acid solution with a concentration of 2.5 mol/L; and
4. Sintering the precursor obtained in step 3 in an argon gas at a temperature of 600 °C, increasing the temperature at a speed of 3 °C/min, and then keeping the temperature for 2 hours, so as to obtain a negative electrode material.

### Embodiment 2

Identical to Embodiment 1 except that the sintering temperature is 800 °C.

### Embodiment 3

Identical to Embodiment 1 except that the sintering temperature is 1000 °C.

### Embodiment 4

Identical to Embodiment 1 except that the siloxane material is triethoxyvinylsilane (TVS).

### Embodiment 5

Identical to Embodiment 1 except that the siloxane material is diethoxydiphenylsilane (DPS).

### Embodiment 6

Identical to Embodiment 1 except that the siloxane material is 1,4-bis(triethoxysilyl)benzene (BSB).

### Embodiment 7

Identical to Embodiment 1 except that the siloxane material is polydimethylsiloxane (PDMS) added in an amount of 2 g.

### Embodiment 8

Identical to Embodiment 7 except that the PDMS is added in an amount of 1 g.

### Embodiment 9

Identical to Embodiment 7 except that the PDMS is added in an amount of 0.5 g.

### Embodiment 10

Identical to Embodiment 6 except that the silicon-oxygen material is a lithium-containing silicon-oxygen material, where the mass percent of lithium in the mass of the lithium-containing silicon-oxygen material is 8%.

### Embodiment 11

Identical to Embodiment 6 except that the silicon-oxygen material is a magnesium-containing silicon-oxygen material, where the mass percent of magnesium in the mass of the magnesium-containing silicon-oxygen material is 13%.

### Comparative Embodiment 1

1. Dispersing 100 g of silicon-oxygen material in 500 mL of aqueous n-hexane, and stirring evenly, where the silicon-oxygen material is silicon monoxide (SiO), and the water content of the n-hexane is 5 vol%.
2. Removing the solvent from the mixed solution obtained in step 1 and drying, sintering the dried product in an inert gas at a temperature of 600 °C, increasing the temperature at a speed of 3 °C/min, and then keeping the temperature for 2 hours, so as to obtain a negative electrode material.

### Comparative Embodiment 2

Identical to Comparative Embodiment 1 except that the silicon-oxygen material is a lithium-containing silicon-oxygen material, where the mass percent of lithium in the mass of the lithium-containing silicon-oxygen material is 8%.

### Comparative Embodiment 3

Identical to Comparative Embodiment 1 except that the silicon-oxygen material is a magnesium-containing silicon-oxygen material, where the mass percent of magnesium in the mass of the magnesium-containing silicon-oxygen material is 13%.

In the foregoing embodiments and comparative embodiments, the preparation process of SiO is: mixing silicon dioxide and metallic silicon powder at a molar ratio of 1: 5 to 5: 1 to obtain a mixed material; heating the mixed material at a temperature of 1200 to 1450 °C under a condition of 10⁻⁴ to 10⁻¹ kPa for 0.5 to 24 hours to obtain a gas; condensing the obtained gas to obtain a solid, and then pulverizing and sifting the obtained solid to obtain SiO.

The lithium-containing silicon-oxygen material may be a pre-lithiated material of SiO, and the mass percent of lithium in the mass of the lithium-containing silicon-oxygen material is 6% to 12%. The magnesium-containing silicon-oxygen material may be a pre-lithiated magnesium material of SiO, and the mass percent of magnesium in the mass of the magnesium-containing silicon-oxygen material is 5% to 20%.

### Performance Test

### Testing the powder properties of the negative electrode material

Observing micromorphology of powder particles: Observing the micromorphology of the powder of the negative electrode material by using a scanning electron microscope, and rendering an image of the surface coating of the material, where the test instrument is: OXFORD EDS (X-max-20 mm²) and the accelerating voltage is 10 KV. Adjusting the focal length, observing the micromorphology at a magnification as high as 50 K, and observing agglomeration of particles at a magnification as low as 500 to 2000.

### Measuring a specific surface area of the negative electrode material

Measuring an amount of a gas adsorbed on a surface of a solid under different relative pressures at a constant low temperature, and then determining a monolayer adsorbed gas quantity of a specimen based on the Brunauer-Emmett-Teller adsorption theory and the BET formula, so as to calculate the specific surface area of the solid.

During the test, weighing out 1.5 to 3.5 grams of powder as a specimen, loading the specimen into a specimen tube of a TriStar II 3020 specific surface area and porosity analyzer, degassing the specimen at 200 °C for 120 minutes, and then testing the specimen.

### Testing the particle size of the negative electrode material

Adding 0.02 gram of powder as a specimen into a 50 ml clean beaker, adding 20 ml of deionized water, and then adding a few drops of 1% surfactant to fully disperse the powder in the water; and then ultrasonically vibrating the solution in a 120 W ultrasonic cleaning machine for 5 minutes, and testing the particle size distribution by using a MasterSizer 2000 laser particle size analyzer.

### Measuring a tap density of the negative electrode material

Measuring the tap density with reference to GB/T 5162-2006 *Metallic Powders Determination of Tap Density.*

### Measuring the carbon content of the negative electrode material

Heating a specimen of the negative electrode material in a high-frequency furnace under an oxygen-rich condition to combust the specimen at a high temperature so that carbon and sulfur are oxidized into a gas of carbon dioxide and sulfur dioxide respectively. Treating the gas, and passing the gas into a corresponding absorption pool to absorb corresponding infrared radiation, and then converting the absorbed infrared beam into corresponding signals by using a detector. Converting the signals, which are sampled and linearly corrected by a computer, into a value proportional to the concentration of the carbon dioxide or sulfur dioxide. Summing all such values obtained in the entire analysis process. Upon completion of the analysis, dividing the sum by the weight value through the computer, and then multiplying by a correction coefficient, and deducting blank values to obtain the mass percent of carbon or sulfur in the specimen. Testing the specimen by using a high-frequency infrared carbon-sulfur analyzer (HCS-140, manufactured by Shanghai Dekai Instrument Co., Ltd.).

### Determining an atomic ratio of the surface of the negative electrode material

Sprinkling the negative electrode material onto a copper foil containing a conductive agent. Cutting the copper foil to form a specimen with a cross section, and polishing the cross section by using an ion beam slope cutter (Leica EM TIC 3X-Ion Beam Slope Cutter), and then placing the specimen into a scanning electron microscope (SEM) to find sectioned silicon-based particles. Cutting the found silicon-based particles along a direction perpendicular to the cross section by using a focused ion beam (FIB), so as to obtain a slice (approximately 50 nm thick) containing the cross section of the silicon-based particles. Measuring the mass percent of each component in the slice with a TEM, and measuring the points 1 to 2 nm away from the outer surface of the slice by using an energy dispersive spectrometer (EDS) to obtain an atomic ratio between Si, O, and C.

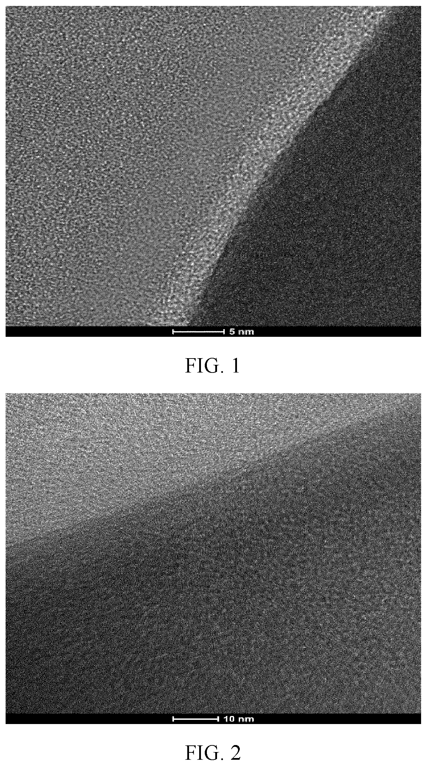

FIG. 1 is a cross-sectional FIB-TEM structural diagram of the negative electrode material prepared according to Embodiment 6, from which a SiOC layer structure is clearly seen. The thickness of the SiOC layer is approximately 4 nm.

FIG. 2 is a cross-sectional FIB-TEM structural diagram of the negative electrode material prepared according to Comparative Embodiment 1, from which no SiOC layer structure is seen.

### Determining an I₂/I₁ ratio of the negative electrode material

XRD test: Weighing out 1.0 to 2.0 grams of the negative electrode material as a specimen. Pouring the specimen into a groove of a glass specimen rack. Compacting and smoothing the specimen by using a glass sheet. Carrying out the test by using a Bruker-D8 X-ray diffractometer with reference to the standard JJS K 0131-1996 *General Rules for X-Ray Diffractometry.* Setting the test voltage to 40 kV, setting the current to 30 mA, setting the scanning angle range to fall in a range of 10° to 85°, setting the scanning step length to 0.0167°, and setting the time of each step length to 0.24 s, so as to obtain an XRD diffraction pattern. From the pattern, obtaining a maximum intensity value I₁ when 2θ is 28.4° and a maximum intensity value I₂ when 2θ is 21.0°, and calculating a ratio of I₂ to I₁.

### Testing the first-cycle Coulombic efficiency of a half battery

Mixing, at a mass ratio of 80: 10: 10, the negative electrode material obtained in each embodiment and comparative embodiment with conductive carbon black and polymer, adding deionized water, and stirring the mixture to form a slurry, and coating a current collector with the slurry that is 100 µm thick by using a scraper. Drying the current collector in a vacuum drying oven at 85 °C for 12 hours, and then cutting the current collector into discs of 1 cm in diameter in a dry environment by using a stamping machine. In a glovebox, assembling a coin battery by using a metallic lithium sheet as a counter electrode, using a Ceglard composite film as a separator, and adding an electrolytic solution. Performing a charge-and-discharge cycle test on the battery by using a LAND battery test system. Calculating the first-cycle Coulombic efficiency by dividing a capacity of the battery discharged until a voltage of 2.0 V by a capacity of the battery charged until a voltage of 0.005 V The test result is shown in Table 1.

### Method for calculating a gram capacity of a half battery

The gram capacity of a half battery is a gram capacity of the half battery discharged until a voltage of 2.0 V.

### Testing the performance of a full battery

### Testing the cycle performance

Charging the battery at a constant current of 0.7 C at 25 °C or 45 °C until the voltage reaches 4.4 V. Charging the battery at a constant voltage until the current reaches 0.025 C. Leaving the battery to stand for 5 minutes, and then discharging the battery at a current of 0.5 C until the voltage reaches 3.0 V. Using the capacity obtained in this step as an initial capacity. Performing a cycle test in which the battery is charged at 0.7 C and then discharged at 0.5 C. Dividing the capacity obtained in each step by the initial capacity to obtain a plurality of ratios. Plotting a capacity fading curve by using the ratios. Performing charge-and-discharge cycles on the battery at 25 °C until the capacity retention rate drops to 90%, and recording the number of cycles at this time as an indicator of the room-temperature cycle performance of the battery. Performing charge-and-discharge cycles at 45 °C until the capacity retention rate drops to 80%, and recording the number of cycles at this time as an indicator of the high-temperature cycle performance of the battery. Comparing the two numbers of cycles to obtain the cycle performance of the material. Table 2 shows the test results of the cycle performance in the embodiments and comparative embodiments.

### Discharge rate test

Discharging the battery at a current of 0.2 C under a temperature of 25 °C until the voltage reaches 3.0 V, and leaving the battery to stand for 5 minutes, and then charging the battery at 0.5 C until the voltage reaches 4.45 V. Charging the battery at a constant voltage until the current reaches 0.05 C, and then leaving the battery to stand for 5 minutes. Adjusting the discharge rate to 0.2 C, 0.5 C, 1 C, 1.5 C, and 2.0 C to test the battery separately and obtain different discharge capacities. Dividing the discharge capacity obtained at each of the discharge rates by the discharge capacity obtained at a 2 C rate to obtain a first ratio, dividing the discharge capacity obtained at each of the discharge rates by the discharge capacity obtained at a 0.2 C rate to obtain a second ratio, and comparing the two ratios to obtain the rate performance.

### Measuring a full-charge expansion rate of a lithium-ion battery

Measuring, by using a spiral micrometer, a thickness of a fresh lithium-ion battery in a half charged state (that is, 50% state of charge (SOC)). When the battery reaches the 400^{th} cycle, the battery is in a fully charged state (100% SOC). Measuring the thickness of the battery at this time by using the spiral micrometer. Comparing the thickness at this time with the thickness of the fresh battery that is half charged initially, so as to obtain the expansion rate of the fully charged lithium-ion battery at this time.

### Preparing a full battery

### Preparing a lithium-ion battery

### Preparing a positive electrode

Mixing well LiCoO₂, conductive carbon black, and polyvinylidene fluoride (PVDF) at a mass ratio of 95%: 2.5%: 2.5% in an N-methyl-pyrrolidone solvent system to prepare a positive slurry with a solid content of 75 wt%. Coating a positive current collector aluminum foil with the prepared positive slurry, and performing drying and cold-pressing to obtain a positive electrode coated with a 110-µm-thick coating layer.

### Preparing a negative electrode

Mixing graphite, the negative electrode material prepared according to each embodiment and comparative embodiment hereof, a conductive agent, and a binder at a mass ratio of 70%: 15%: 5%: 10%, and adding an appropriate amount of water to obtain a slurry with a solid content of 55 wt% to 70 wt%. Subsequently, adding another appropriate amount of water, and adjusting the viscosity of the slurry to 4000 to 6000 Pa s to prepare a negative slurry. Coating a negative current collector copper foil with the slurry, and performing drying and cold-pressing to obtain a negative electrode coated with a 100-µm-thick coating layer. The conductive agent is conductive carbon black, and the binder is polyacrylic acid (PAA).

### Preparing an electrolytic solution

Adding LiPF₆ into a solvent in a dry argon atmosphere, where the solvent is a mixture of propylene carbonate (PC), ethylene carbonate (EC), and diethyl carbonate (DEC). Mixing the solution well, and then adding 12.5 wt% fluoroethylene carbonate (FEC), and mixing the solution well to obtain an electrolytic solution. The mass ratio between the propylene carbonate, the ethylene carbonate, and the diethyl carbonate is 1:1:1, and the concentration of LiPF₆ is 1.15 mol/L.

### Preparing a separator

Using a 15-µm-thick polyethylene (PE) porous polymer film as a separator.

### Preparing a lithium-ion battery

Stacking the positive electrode, the separator, and the negative electrode in sequence so that the separator is located between the positive electrode and the negative electrode to serve a purpose of isolation, and then winding the stacked structure to obtain an electrode assembly. Putting the electrode assembly into an outer package, injecting an electrolytic solution, sealing the package, and performing steps such as chemical formation, degassing, and edge trimming to obtain a lithium-ion battery.

**Table 1 Parameters of the negative electrode material and test results of the half battery in embodiments and comparative embodiments**

| | Silicon-based particle material | I₂/I₁ | Dₙ₁₀/D_{V50} | Atomic ratio between Si, O and C | Type of siloxane or silicon resin | Sintering temperature (°C) | Carbon content of negative electrode material (wt%) | BET (m²·g⁻¹) | Gram capacity (mAh·g⁻¹) | First-cycle Coulombic efficiency (%) |
|---|---|---|---|---|---|---|---|---|---|---|
| Embodiment 1 | SiO (100 g) | 0.42 | 0.47 | 1: 2.5: 5.8 | TPS | 600 | 0.17 | 2.34 | 1654 | 68.5% |
| Embodiment 2 | SiO (100 g) | 0.63 | 0.48 | 1: 2.4: 5.2 | TPS | 800 | 0.15 | 2.24 | 1662 | 68.9% |
| Embodiment 3 | SiO (100 g) | 1.12 | 0.45 | 1: 2.6: 4.5 | TPS | 1000 | 0.13 | 1.98 | 1687 | 68.4% |
| Embodiment 4 | SiO (100 g) | 0.43 | 0.42 | 1: 2.6: 2.0 | TVS | 600 | 0.15 | 1.76 | 1642 | 67.9% |
| Embodiment | SiO (100 g) | 0.42 | 0.49 | 1: 1.8: 3.8 | DPS | 600 | 0.16 | 1.92 | 1660 | 68.2% |
| 5 | | | | | | | | | | |
| Embodiment 6 | SiO (100 g) | 0.41 | 0.40 | 1: 2.6: 2.5 | BSB | 600 | 0.14 | 2.32 | 1652 | 69.4% |
| Embodiment 7 | SiO (100 g) | 0.40 | 0.55 | 1: 1.8: 2.5 | PDMS | 600 | 0.54 | 3.32 | 1635 | 65.7% |
| Embodiment 8 | SiO (100 g) | 0.40 | 0.55 | 1: 2.0: 2.2 | PDMS | 600 | 0.25 | 2.74 | 1638 | 68.2% |
| Embodiment 9 | SiO (100 g) | 0.40 | 0.55 | 1: 2.0: 2.7 | PDMS | 600 | 0.12 | 2.32 | 1654 | 68.4% |
| Embodiment 10 | Lithium-containing silicon-oxygen | / | 0.34 | 1:2.4:2.6 | BSB | 600 | 0.12 | 2.35 | 1380 | 88.9% |

| | material (100 g) | | | | | | | | | |
|---|---|---|---|---|---|---|---|---|---|---|
| Embodiment 11 | Magnesium-containing silicon-oxygen material (100 g) | / | 0.32 | 1:2.3:2.2 | BSB | 600 | 0.12 | 2.17 | 1350 | 87.5% |
| Comparative Embodiment 1 | SiO (100 g) | / | 0.42 | / | / | / | 0.03% | 1.45 | 1650 | 70.2% |
| Comparative Embodiment 2 | Lithium-containing silicon-oxygen material (100 g) | / | 0.38 | / | / | / | 0.01% | 2.34 | 1440 | 89.2% |
| Comparative | Magnesium-containing | / | 0.45 | / | / | / | 0.01% | 2.19 | 1380 | 87.6% |
| | Silicon-based particle material | I₂/I₁ | Dₙ₁₀/D_{V50} | Atomic ratio between Si, O and C | Type of siloxane or silicon resin | Sintering temperature (°C) | Carbon content of negative electrode material (wt%) | BET (m²·g⁻¹) | Gram capacity (mAh·g⁻¹) | First-cycle Coulombic efficiency (%) |
| Embodiment 3 | silicon-oxygen material (100 g) | | | | | | | | | |

**Table 2 Performance test results of lithium-ion batteries prepared from negative electrode material in each embodiment and comparative embodiment**

| | Number of cycles when capacity fades to 90% after cycling at 25 °C | Expansion rate of battery cycled at 25 °C for 500 cycles | Number of cycles when capacity fades to 80% after cycling at 45 °C | Expansion rate of battery cycled at 45 °C for 400 cycles | Discharge rate |
|---|---|---|---|---|---|
| Embodiment 1 | 750 | 6.4% | 520 | 8.5% | 89.0% |
| Embodiment 2 | 720 | 6.6% | 483 | 8.7% | 87.3% |
| Embodiment 3 | 680 | 6.4% | 430 | 9.3% | 86.5% |
| Embodiment 4 | 730 | 6.1% | 502 | 8.2% | 89.5% |
| Embodiment 5 | 742 | 6.3% | 530 | 8.6% | 88.9% |
| Embodiment 6 | 787 | 6.2% | 531 | 8.4% | 89.2% |
| Embodiment 7 | 604 | 6.5% | 392 | 9.4% | 89.6% |
| Embodiment 8 | 635 | 6.0% | 423 | 9.1% | 88.8% |
| Embodiment 9 | 640 | 6.2% | 432 | 9.0% | 88.2% |
| Embodiment 10 | 600 | 7.9% | 420 | 10.9% | 89.5% |
| Embodiment 11 | 503 | 9.8% | 370 | 12.8% | 88.7% |
| Comparative Embodiment 1 | 603 | 7.2% | 402 | 9.2% | 86.9% |
| Comparative | 520 | 8.3% | 392 | 11.3% | 85.2% |
| Embodiment 2 | | | | | |
| Comparative Embodiment 3 | 480 | 10.4% | 350 | 13.7% | 85.4% |

As can be seen from Embodiments 1 to 6 and Embodiments 8 to 9 versus Comparative Embodiment 1, the negative electrode material coated with the SiOC on the surface is superior to the negative electrode material uncoated with the SiOC in that the lithium-ion battery achieves significantly improved cycle performance and improved expansion rate and discharge rate under different temperatures. As can be seen from Embodiments 1 to 3, with the gradual rise of the sintering temperature, the carbon content on the surface of the negative electrode material gradually decreases, the cycle performance gradually declines, and the expansion rate and discharge rate gradually increase. Therefore, the effect is good when a relatively low temperature is selected, and the temperature is preferably 600 °C.

As can be seen from Embodiment 7 versus Comparative Embodiment 1, the number of cycles of the battery cycled at 25 °C is slightly greater than that of Comparative Embodiment 1, and the number of cycles of the battery cycled at 45 °C is slightly less than that of Comparative Embodiment 1, but the expansion rate and discharge rate are significantly improved. A possible reason is that the doping amount of the PDMS is relatively large. Because the tiling performance of the PDMS itself on the surface of the negative electrode material is relatively low, a larger doping amount of the PDMS is more prone to cause surface instability and impair the cycle performance of the lithium-ion batteries, but improves both the expansion rate and discharge rate of the lithium-ion battery.

As can be seen from Embodiment 10 versus Comparative Embodiment 2, with the same lithium-containing siloxane material, the negative electrode material coated with the SiOC on the surface is superior to the negative electrode material uncoated with the SiOC in that the lithium-ion battery achieves significantly improved cycle performance and improved expansion rate and discharge rate under different temperatures.

As can be seen from Embodiment 11 versus Comparative Embodiment 3, with the same magnesium-containing siloxane material, the negative electrode material coated with the SiOC on the surface is superior to the negative electrode material uncoated with the SiOC in that the lithium-ion battery achieves significantly improved cycle performance and improved expansion rate and discharge rate under different temperatures.

As can be seen from Embodiments 7 to 9 versus Comparative Embodiment 1, the negative electrode material coated with the SiOC on the surface and doped with different mass percentages of the siloxane material is superior to the negative electrode material uncoated with the SiOC in that the lithium-ion battery achieves significantly improved cycle performance and improved expansion rate and discharge rate.

What is described above is merely preferred embodiments of this application, but is not intended to limit this application. Any modifications, equivalent substitutions, and improvements made without departing from the spirit and principles of this application still fall within the protection scope of this application.

## Claims

1. A negative electrode material, comprising a silicon-based particle and SiOC existent on a surface of the silicon-based particle, wherein
an atomic ratio between Si, O, and C in the SiOC is 1: (0.5 to 5): (0.5 to 10); and
Dᵥ₅₀ of the negative electrode material is 2.5 µm to 10 µm, and a mass percent of the SiOC in a mass of the negative electrode material is 0.1% to 20%.

2. The negative electrode material according to claim 1, wherein the SiOC is in an amorphous structure.

3. The negative electrode material according to claim 1, wherein a particle size distribution of the silicon-based particle satisfies: 0.3 ≤ Dₙ₁₀/Dᵥ₅₀ ≤ 0.6.

4. The negative electrode material according to claim 1, wherein the silicon-based particle comprises at least one of a nano-silicon particle, a silicon suboxide particle, or a carbon-silicon composite particle.

5. The negative electrode material according to claim 1, wherein the silicon-based particle comprises at least one of element Li or element Mg.

6. The negative electrode material according to claim 1, wherein the SiOC is formed by a pyrolysis reaction of a siloxane material, and the siloxane material comprises at least one of siloxane, a siloxane hydrolyzate, or silane resin.

7. The negative electrode material according to claim 6, wherein the siloxane comprises at least one of methyltriethoxysilane, ethyltriethoxysilane, vinyltriethoxysilane, phenyltriethoxysilane, diphenyltriethoxysilane, diethoxymethylphenylsilane, methyltrimethoxysilane, benzyltriethoxysilane, vinyltrimethoxysilane, isobutyltriethoxysilane, dimethoxy(methyl)phenylsilane, cyclohexylmethyldimethoxysilane, octyltrimethoxysilane, propyltrimethoxysilane, octadecyltriethoxysilane, hexyltriethoxysilane, octylmethyldimethoxysilane, dimethyldiethoxysilane, octadecyltrimethoxysilane, dodecyltriethoxysilane, allyltrimethoxysilane, hexadecyl trimethoxysilane, methylvinyldiethoxysilane, n-octyltriethoxysilane, diisobutyldimethoxysilane, (chloromethyl)diethoxy(methyl)silane, dimethoxymethylvinylsilane, γ-aminopropylmethyldiethoxysilane, or 1,4-bis(triethoxysilyl)benzene; and
the silane resin comprises silicone resin, and the silicone resin comprises at least one of aliphatic group silane resin or phenyl silane resin.

8. The negative electrode material according to claim 1, wherein an oxide represented by a chemical formula MeO_{y} further exists on the surface of the silicon-based particle, and the element Me comprises at least one of Al, Si, Ti, Mn, V, Cr, Co, or Zr, 0.5 ≤ y ≤ 3, and the oxide contains a carbon material.

9. The negative electrode material according to claim 1, wherein a polymer further exists on the surface of the silicon-based particle, and the polymer contains a carbon material.

10. The negative electrode material according to claim 9, wherein the polymer comprises at least one of polyvinylidene difluoride, carboxymethyl cellulose, sodium carboxymethyl cellulose, polyvinylpyrrolidone, polyacrylic acid, polystyrene butadiene rubber, polyacrylamide, polyimide, polyamide imide, or a derivative thereof.

11. The negative electrode material according to claim 8 or 9, wherein the carbon material comprises at least one of carbon nanotubes, carbon nanoparticles, carbon fibers, or graphene.

12. A negative electrode plate, comprising the negative electrode material according to any one of claims 1 to 11.

13. An electrochemical device, comprising: a positive electrode plate;
a negative electrode plate; and
a separator, wherein the separator is located between the positive electrode plate and the negative electrode plate; and
an electrolytic solution, wherein
the negative electrode plate is the negative electrode plate according to claim 12.

14. An electronic device, comprising the electrochemical device according to claim 13.
